# EUROPEAN PATENT SPECIFICATION

(11) **EP 2 784 893 B1**
(45) Date of publication and mention of the grant of the patent: **09.12.2015**
(21) Application number: 13161876.1
(22) Date of filing: 29.03.2013
(51) Int. Cl.: H02H 7/26, H02H 7/22, H02H 7/28

(54) **Busbar protection against faults between circuit breaker and current transformer**
Sammelschienenschutz vor Fehlern zwischen Schutzschalter und Stromtransformator
Protection de jeu de barres contre les défauts entre sectionneur et transformateur de courant

(43) Date of publication of application: 01.10.2014
(73) Proprietor: ALSTOM Technology Ltd, 5400 Baden (CH)
(72) Inventor: Pal, Amit, Stafford, ST17 4DN (GB)
(74) Representative: Ilgart, Jean-Christophe

(56) References cited:
- EP-A1- 0 108 012
- EP-A1- 0 584 447
- WO-A1-00/48284
- JP-A- 2009 148 113
- US-B2- 6 845 301

## Description

### FIELD OF THE INVENTION

The invention generally relates to the field of busbar protection in power systems and in particular to protection against faults occurring between circuit breaker and current transformer.

### DESCRIPTION OF THE PRIOR ART

In a power network, such as a transmission and distribution grid, the central distribution point for many feeders is the busbar system where a busbar provides common connection for several electric circuits. A busbar may for instance form part of a substation. Busbar faults, although relatively rare compared to line faults, may cause significant losses and disturbances in the power network.

The busbar configurations typically employed in any substation can be broadly classified into six categories:
a) Main & Transfer
b) Main 1 & Main 2
c) Main 1- Main 2 & Transfer
d) Main 1, Main 2 & Main 3
e) Mesh corner schemes
f) One & half breaker configurations

The implementation of any specific type of busbar configuration depends on various criteria's like system voltage level, required operational flexibility, possibility of maintenance of breakers or busbar, criticality of the load and assurance of continuity of supply for any scheduled or unscheduled outage of the Main bus bars.

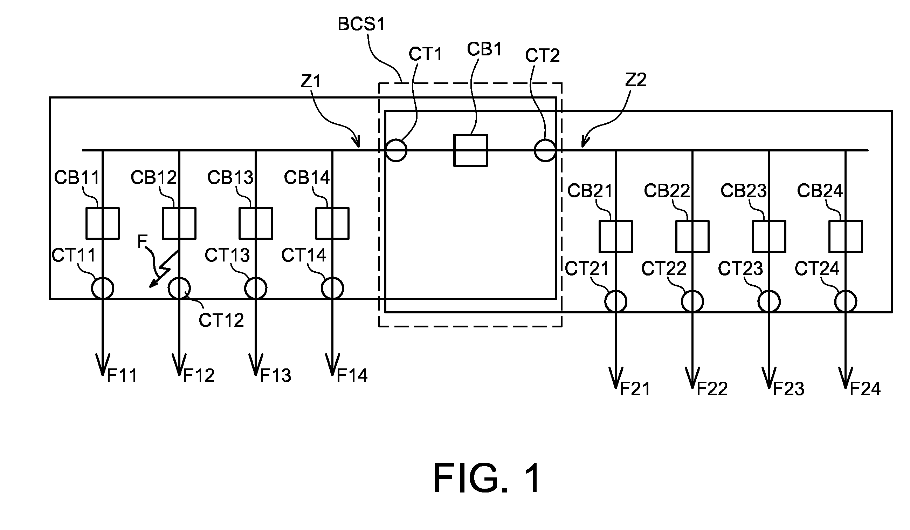

Figure 1 shows a single bus system with bus sectionalizer. The bus comprises a first busbar zone Z1 and a second busbar zone Z2. Feeder bays F11, F12, F13, F14, to which respective current transformers CT11, CT12, CT13, CT14 are associated, are connectable to the first busbar zone Z1 by means of respective first feeder circuit breakers CB11, CB12, CB13, CB14. Feeder bays F21, F22, F23, F24, to which respective current transformers CT21, CT22, CT23, CT24 are associated, are connectable to the second busbar zone Z2 by means of respective second feeder circuit breakers CB21, CB22, CB23, CB24. The first feeder bays and the second feeder bays are coupled together, and so are the first and second busbar zones, by a bus coupling section BCS1. The bus coupling section BCS1 is an overlapping region of the first and second busbar zones Z1, Z2 in which is arranged a circuit breaker CB1 and two current transformers CT1, CT2, one on each side of the circuit breaker CB1.

If a fault F occurs between a feeder circuit breaker CB12 and the associated current transformer CT12, the busbar protection issues a trip not only to the faulty circuit breaker CB12 but to all the circuit breakers CB11-CB14 of the associated busbar zone Z1. As a consequence all the healthy feeder bays F11, F13, F14 are loosed.

If a fault occurs in the bus coupling section BCS1 between a current transformer and the circuit breaker, then this fault falls in the overlapping region which can be identified as a differential by both zone 1 and zone 2 elements. The major drawback of such scheme is that it cannot be discriminated whether the fault is on the left hand side or on the right hand side of the circuit breaker CB1 of the bus coupling section.

According to a first tripping methodology, since the fault cannot be discriminated effectively, a simultaneous trip is issued to both zones. As a consequence, both busbar zones Z1, Z2 are loosed, leading to the total outage in the substation. In particular, the healthy busbar zone is tripped for a fault occurring in the adjacent busbar zone.

In another tripping methodology, instead of tripping both busbar zones together and loosing the entire bus, a sequential approach is adopted. A trip is first issued to the circuit breaker CB1 and the topology waits for the circuit breaker CB1 to open. Once the circuit breaker CB1 trips successfully, then one of the busbar zone gets stabilized whereas the faulty zone differential still remains active high. Thus identifying this, it leads to the tripping of the faulty zone alone and saves the healthy zone.

Major drawback of this second methodology is that there is an additional delay in fault clearing which is equal to the trip time of circuit breaker + auxiliaries + master trip relays + relay topology refresh time. Typically this delay can be of the order of 80-100ms. At EHV (Extra High Voltage) and UHV (Ultra Large Voltage) levels, such delayed tripping may not be acceptable for bus faults, due to system stability concerns.

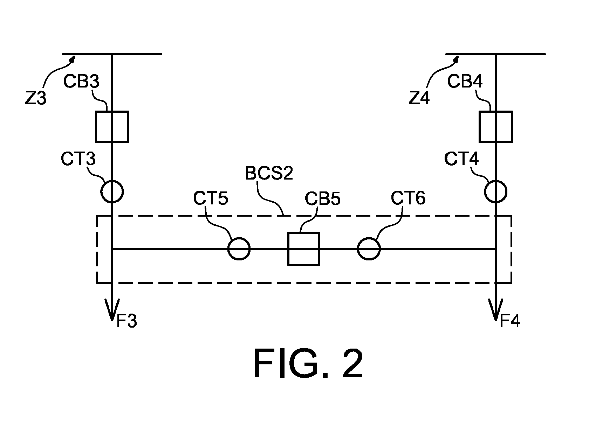

Figure 2 shows a One & Half breaker bus configuration where the same problems are experienced that it is not possible to discriminate on which side of a circuit breaker of fault occurs.

According to this configuration, a first feeder bay F3 to which a current transformer CT3 is associated, is connectable to a first busbar zone Z3 by means of a first feeder circuit breaker CB3. A second feeder bay F4, to which a respective current transformer CT4 is associated, is connectable to a second busbar zone Z4 by means of a second feeder circuit breaker CB4. The first feeder bay and the second feeder bay are coupled together by a bus coupling section BCS2 which is a tie coupling section to which each bus bar zone Z3, Z4 is connectable by means of the first and second feeder circuit breakers CB3, CB4, respectively.

In the same manner as for the busbar arrangement of figure 1, the bus coupling section BCS2 of the 1.5 breaker bus configuration comprises a circuit breaker CB5 (tie breaker) and two current transformers CT5, CT6, one on each side of the circuit breaker CB5.

It appears that the traditional busbar protection solutions present the drawback that it is not possible to discriminate on which side of a circuit breaker a fault occurs.

In particular, the traditional busbar protection solutions present the drawback that it is not possible to discriminate whether a fault is located between the feeder circuit breaker and the associated current transformer or is located between the feeder circuit breaker and the busbar zone (or towards the busbar zone). As a result of this, instead of tripping only the faulty feeder circuit breaker and issuing an inter trip command to a remote end breaker, the busbar protection issues a trip for the complete zone. Thus all the remaining healthy feeders (inclusive of the faulty feeder circuit breaker) which were connected to this busbar zone get disconnected.

Moreover, even after the trip of the complete busbar zone and disconnection of all the associated feeders, the fault still remains active and continues being fed from the remote end. Detecting the feeder circuit breaker as open and the presence of fault through the current transformer, the Dead zone protection comes into picture and issues an inter trip to the remote end circuit breaker. This introduces an additional delay in fault clearance which corresponds to trip time of circuit breaker + auxiliaries + master trip relays + relay topology refresh time. Typically this delay can be of the order of 80-100ms, which may not be acceptable due to system stability concerns.

In the same manner, it appears that the traditional bus bar protection solutions are not discriminative for faults occurring in the bus coupling section between the circuit breaker and one of its associated current transformer. This leads either to instantaneous tripping but with the healthy zone also being disconnected, or to delay tripping, both being inacceptable.

WO 00/48284 is reflecting an example of such prior art bus systems.

### 5 SUMMARY OF THE INVENTION

The invention aims at overcoming the above mentioned limitations of the traditional bus bar protection solutions, and proposes to this effect an electrical bus system comprising a first busbar zone, at least one first feeder bay to which is associated a first current transformer and which is connected to the first busbar zone by means of a first feeder circuit breaker, the at least one first feeder bay being coupled to at least one second feeder bay by a bus coupling section wherein at least one circuit breaker is arranged, characterized in that at least one current transformer is arranged in the bus coupling section and the first current transformer and/or, respectively, the at least one current transformer of the bus coupling section is an optical current transformer mounted on or installed in close proximity to the first feeder circuit breaker, respectively to the at least one circuit breaker of the bus coupling section, at a distance lower than 1 meter.

Certain preferred but not limiting features of this system are as follows:
- the first current transformer and/or, respectively, the at least one current transformer of the bus coupling section is an optical current transformer mounted on or installed in close proximity to the first feeder circuit breaker, respectively to the at least one circuit breaker of the bus coupling section;
- the first feeder circuit breaker, and/or the at least one circuit breaker of the bus coupling section respectively, comprises two circuit breakers arranged in series and each rated equal to half the system voltage, and the first current transformer, respectively the at least one current transformer of the bus coupling section, is arranged at one input of the series arrangement of the two circuit breakers;
- the bus coupling section comprises an overlapping region of the two busbar zones where at least one current transformer is arranged;
- the two busbar zones are arranged according to a 1.5 breaker bus configuration, the bus coupling section is a tie coupling section to which each busbar zone is connected by means of a feeder circuit breaker, at least one current transformer being arranged in the bus coupling section;
- two optical current transformers and one circuit breaker are arranged in the bus coupling section, said circuit breaker in the coupling section having one of said optical current transformers on each of its sides.
- one optical current transformer and two circuit breakers are arranged in the bus coupling section, said optical current transformer in the coupling section having one of said circuit breakers on each of its sides.
- the first feeder circuit breaker and/or the at least one circuit breaker of the bus coupling section is a dead tank circuit breaker comprising a bushing having an earth potential part, and the first current transformer and/or the at least one current transformer of the bus coupling section is an optical current transformer having a sensor head which is wound around
said earth potential part of the bushing of the dead tank circuit breaker.

### DESCRIPTION OF THE DRAWINGS

Other aspects, goals, advantages and features of the invention will appear more clearly on reading the following detailed description of preferred embodiments thereof, given by way of non-limiting example and with reference to the accompanying drawing in which:
- figure 1, already discussed, shows a prior art Main 1 & Main 2 bus bar configuration;
- figure 2, already discussed, show a prior art 1.5 breaker bus configuration;
- figure 3 show an electrical bus system according to a possible embodiment of the invention based on the Main 1 & Main 2 bus bar configuration;
- figures 4a-4b and figures 5a-5b show electrical bus systems according to possible embodiments of the invention based on the 1.5 breaker bus configuration;
- figures 6a-6b, 7a-7b, 8a-8b, 9a-9d, 10a-10b and 11a-11b show various associations of an optical current transformer with one or two circuit breakers that can be used in embodiments of the invention.

### DESCRIPTION OF PREFERRED EMBODIMENTS

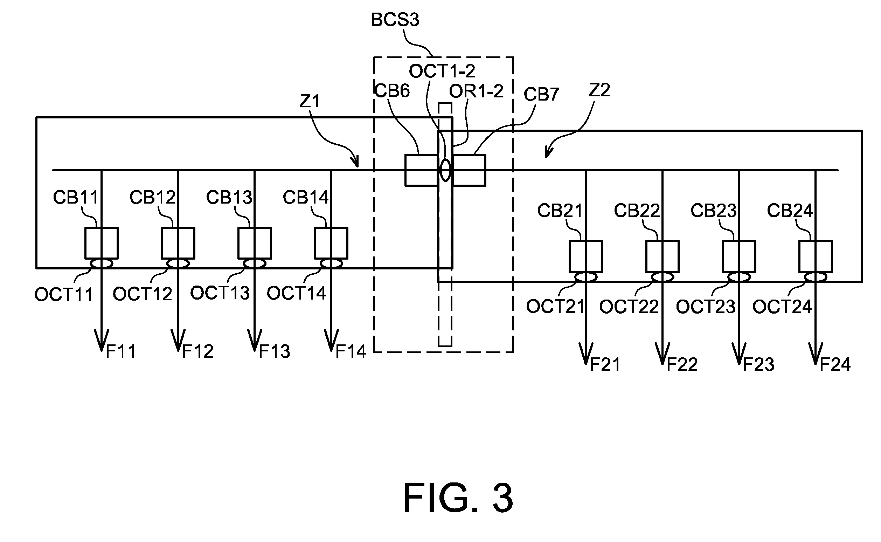

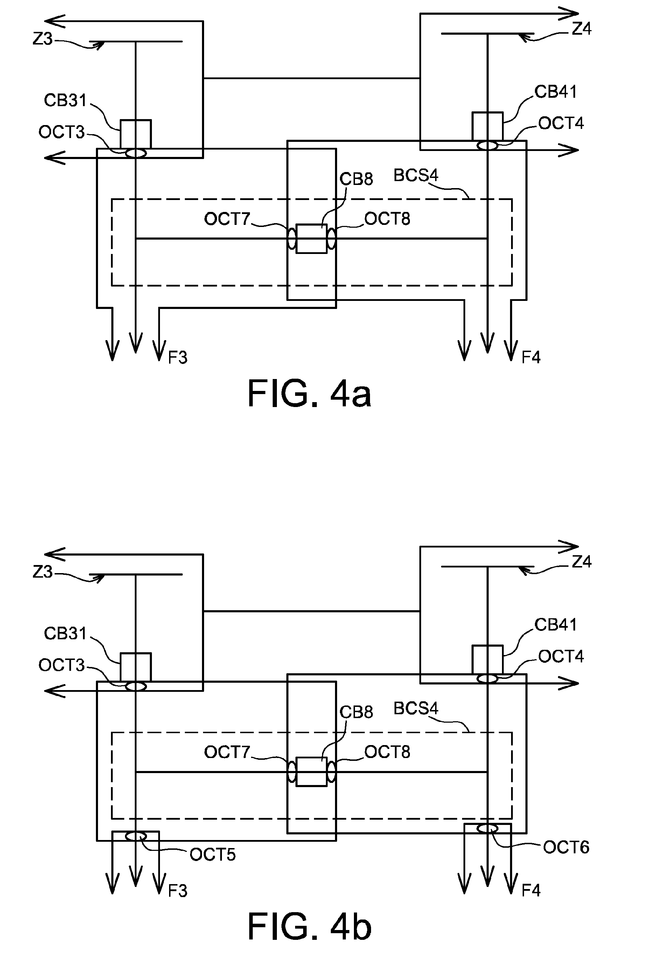

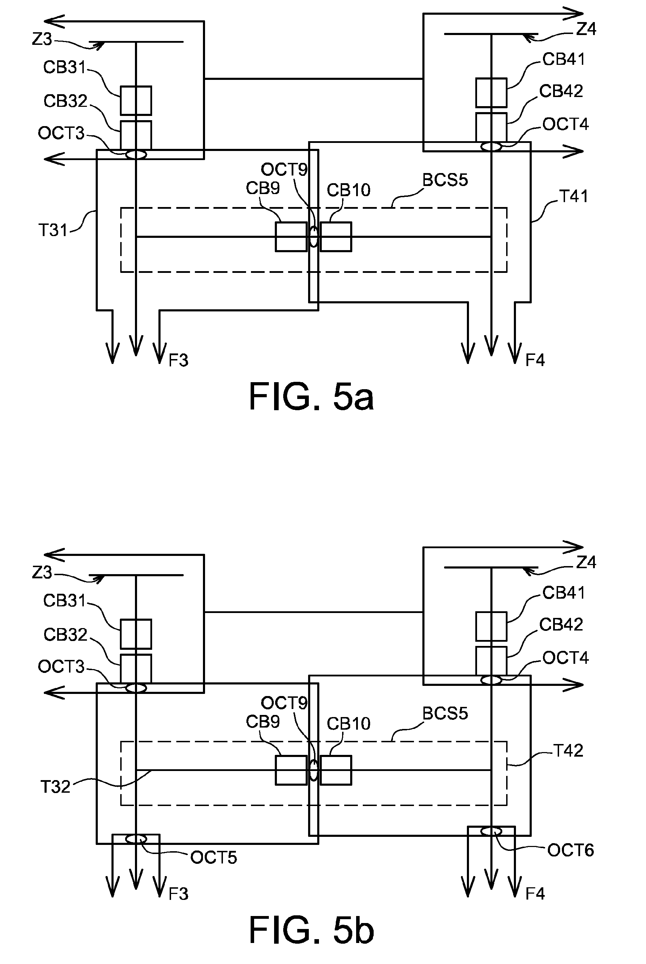

The following description is made with reference in particular to figure 3, respectively figures 4a-4b and 5a-5b, which show electrical bus systems according to possible embodiments of the invention based on the Main 1 & Main 2 bus bar configuration (the prior art configuration thereof being illustrated on figure 1), respectively based on the 1.5 breaker bus configuration (the prior art configuration thereof being illustrated on figure 2).

The invention relates to an electrical bus system comprising a first busbar zone Z1, Z3 and a second busbar zone Z2, Z4, at least one first feeder bay F11-F14, F3 to which is associated a first current transformer OCT11-OCT14, OCT3 and which is connectable to the first busbar zone Z1, Z3 by means of at least one first feeder circuit breaker CB11-CB14, CB31, CB32, at least one second feeder bay F21-F24, F4 to which is associated a second current transformer OCT21-OCT24, OCT4 and which is connectable to the second busbar zone Z2, Z4 by means of at least one second feeder circuit breaker CB21-CB24, CB41, CB42.

The at least one first feeder bay and the at least one second feeder bay are coupled together by a bus coupling section BCS3, BSC4, BCS5 wherein at least one current transformer OCT1-2, OCT7, OCT8, OCT9 and at least one circuit breaker CB6, CB7, CB8, CB9, CB10 are arranged.

As shown on figure 3, the two busbar zones Z1, Z2 can be arranged according to a Main 1 & Main 2 bus bar configuration with the bus coupling section BCS3 comprising an overlapping region OR1-2 of the two busbar zones Z1, Z2.

As shown on figures 4a-4b and 5a-5b, the two busbar zones Z3, Z4 can be arranged according to a 1.5 breaker bus configuration with the bus coupling section BCS4, BCS5 being a tie coupling section to which each busbar zone Z3, Z4 is respectively connectable by means of the first and second feeder circuit breakers CB31, CB32, CB41, CB42. It shall be noted that the electrical bus system of figure 4b, respectively the one of figure 5b, differs from the one of figure 4a, respectively from the one of figure 5a, in that it comprises two additional current transformers OCT5, OCT6.

The invention is based on the findings that the above mentioned limitations could be overcome if the physical distance between a circuit breaker and the location of the associated current transformer is reduced. The invention therefore proposes making use of optical current transformer and locating the optical current transformer in very close proximity to the circuit breaker. More particularly, in the bus system of the invention, the first current transformer OCT11-OCT14, OCT3 of the first feeder bay and/or the at least one current transformer OCT1-2, OCT7-OCT9 of the bus coupling section is an optical current transformer.

With conventional current transformers, a 'zero' distance with the circuit breaker is practically not possible because of the following reasons.
- Conventional currents transformers are many times bulkier and heavier than optical current transformers.
- The higher the system voltage level and the knee point voltage Vk requirement of the current transformer, the larger is its size.
- Clearances as per various international standards need to be accounted for.
- Ease of maintenance, convenience in having access, flexibility from operational aspects and replacement activities (if required in future), all needs to be considered.
- Due to the reasons mentioned above and also on civil and erection grounds, it is difficult to achieve a zero clearance between the current transformer and the associated circuit breaker.

In general, depending on the system voltage level and also the layout arrangement, the clearance between the current transformer and the circuit breaker can range from few meters to a few feet's. But in any case, practically it is very difficult to reduce this distance to an absolute 'zero' figure.

Such limitations can be greatly overcome if non conventional current transformers are used, such as optical current transformers, for instance optical current transformers from the COSI (Compact Optical Sensor Intelligence) range of current transformers.

Optical current transformers provide many advantages as compared to the conventional current transformers. Apart from the various electrical, mechanical, environment related and many more benefits which the optical current transformer provides, some of the key features which are of interest for the bus bar protection of the invention are listed below.
- Light weight. As an example, optical current transformers for 145 kV and 800 kV voltage level applications weigh roughly around 40 kg and 80 kg respectively.
- Compact design. Optical current transformers are very compact in design and less in size compared to the conventional current transformers. They typically consist of a Faraday effect ring type optical sensor on a lightweight dry- type insulator post.
- Installation flexibility. The light weight and attractive compact design adds high degree of flexibility in the installation work.
- No additional structures or civil work may be required at all. Due to its small size and less weight, it is possible to mount the optical current transformer directly on the circuit breaker itself.

For reasons mentioned above, it is possible with optical current transformers to reduce the clearance to an absolute zero figure, thus almost eliminating the probability of a fault occurring in between a circuit breaker and a current transformer. The distance is no longer in multiples of meters or feet's, but its few cm's or inches and therefore the probability of a fault happening in this area nearly tends to be zero.

In a preferred embodiment, the optical current transformer is mounted on or installed in close proximity to the associated circuit breaker at a distance lower than 1 meter, more preferably at a distance lower than 50 cm, still more preferably at a distance lower than 30 cm, still more preferably at a distance lower than 10 cm, still more preferably at a distance lower than 5 cm.

In a first embodiment, the current transformer associated to a feeder circuit breaker is an optical transformer.

As shown on figure 3 and figures 4a-4b and 5a-5b, an optical current transformer OCT11-OCT14, OCT21-OCT24, OCT3, OCT4 is associated and placed in close proximity to each feeder circuit breaker CB11-CB14, CB21-CB24, CB31, CB41, CB32, CB42 of the electric bus system of the invention.

In a second embodiment which can be implemented independently or not from the first embodiment, the at least one current transformer OCT1-2, OCT7-OCT9 of the bus coupling section is an optical transformer.

In a variant of this second embodiment illustrated on figure 3 and figures 5a-5b, instead of having within the bus coupling circuit one circuit breaker and current transformers on either side (see for instance bus coupling circuits BCS1, BCS2 and BCS4 on figures 1, 2 and 4a-4b respectively), an optical current transformer OCT1-2, OCT9 and two circuit breakers CB6, CB7, CB9, CB10 can be arranged in the bus coupling section of the invention, said current transformer in the coupling section having one of said circuit breakers on each of its sides. Depending upon the system voltage, the optical current transformer can be located in between two circuit breakers arranged in series and each rated half the system voltage (this is in particular the case when live tank circuit breakers are used in the voltage levels from 700-1200 KV). As shown of figures 3 and 5a-5b, this arrangement is such that the overlapping region (of the bus bar zones Z1, Z2 on figure 3, and of the tie differential zones T31, T41 and T32, T42 on figures 5a-5b) is restricted to the central current transformer OCT1-2, OCT8.

In a preferred embodiment, optical current transformers replace all the current transformers present in the system: current transformers associated to feeder circuit breakers, current transformer(s) in the bus coupling section, and the additional current transformers OCT5, OCT6 of the busbar configurations represented on figures 4b and 5b.

Advantages offered by the optical current transformer based proposed solution are as follows.
- The probability of faults occurring between a circuit breaker and the associated current transformer is significantly reduced because of the close proximity of the current transformer with respect to the breaker.
- The possibility of issuing a trip to the complete busbar zone for faults occurring between a feeder circuit breaker and the associated current transformer is greatly reduced. This ensures the availability of the healthy feeders connected to the specific busbar zone, prevents supply interruption/ outages and almost eliminates the chances of their wrong operation.
- The possibility of issuing a trip to both busbar zones (instantaneous tripping methodology), or the possibility of delayed tripping of the faulty zone (sequential tripping methodology), for faults occurring in the bus coupling section is greatly reduced. This ensures the availability of the healthy bus bar zone, prevents supply interruption/ outages and ensures system stability. - Loss of revenue from an unwanted trip is prevented.

For substations with voltage level ranging from 100 kV - 550 kV, discussing on a per pole/ per phase basis, a circuit breaker is basically a single physical unit. As an example, if we consider an application at a voltage level of 550 kV, then the circuit breaker is a single unit rated for 550 kV.

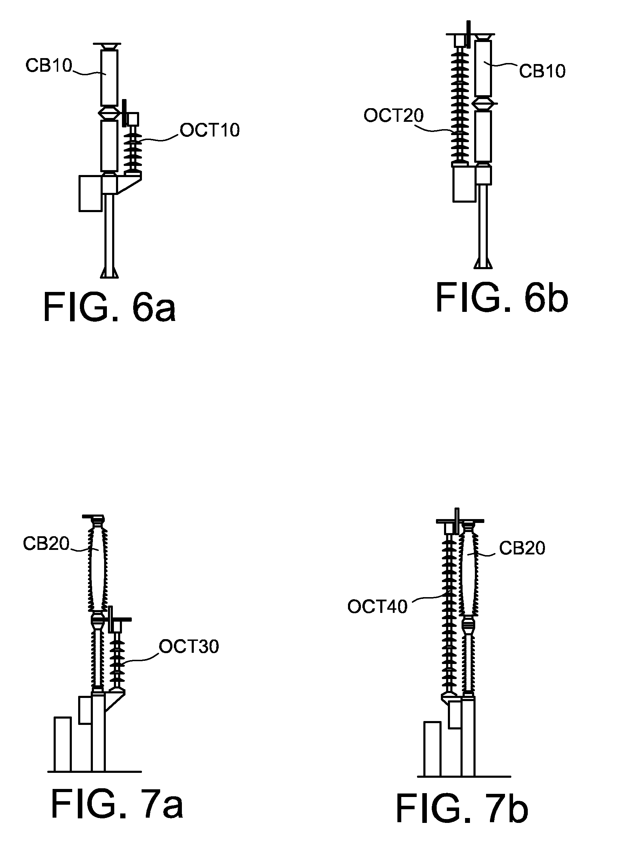

With optical current transformers being compact in design and light in weight, it is possible to locate them in very close proximity with the associated circuit breaker and therefore the probability of faults occurring between the circuit breaker and the current transformer can be said to be almost eliminated. Figures 6a-6b, 7a-7b and 8a show the physical location or mounting of the optical current transformer with respect to a circuit breaker for substations at a voltage level of 100-145 kV (figures 6a-6b where the optical current transformer OCT10, OCT20 is located in close proximity with the lower and upper terminal of the circuit breaker, respectively), at a voltage level of 245-300 kV (figures 7a-7b where the optical current transformer OCT30, OCT40 is located in close proximity with the lower and upper terminal of the circuit breaker CB20, respectively) and at a voltage level of 550 kV (optical current transformer OCT50 in close proximity to circuit breaker CB30).

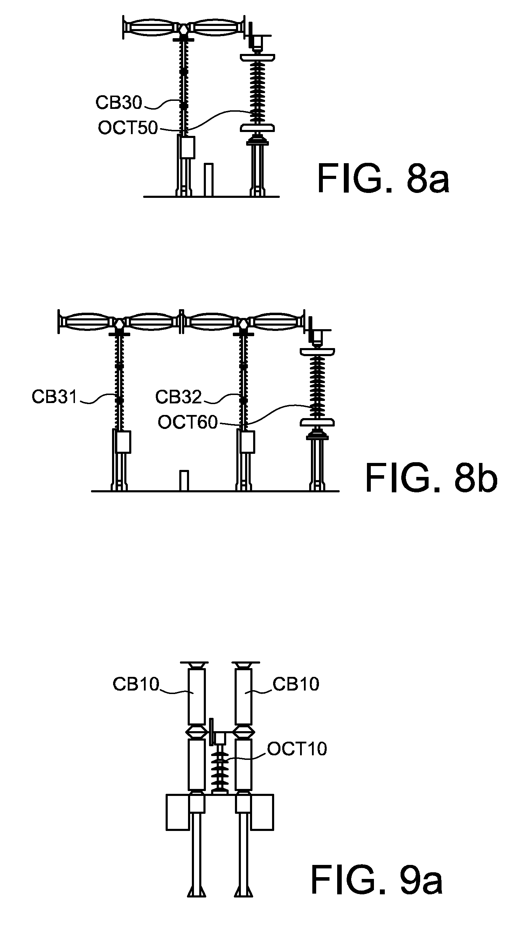

For substations with voltage level ranging from 700 kV - 1200 kV, still discussing on per pole/ per phase basis, a circuit breaker is generally a series of two single physical units, each rated equal to half of the system voltage. As an example, if we consider an application at a voltage level of 800 kV, then the conventional circuit breaker is a series of two 400 kV units. Figure 8b illustrate a series of two 400 kV circuit breakers CB31, CB32 arranged in series, with an optical current transformer OCT60 located in close proximity to an input of this series association. Such an arrangement is for instance used in the bus system of figures 5a-5b where the feeder circuit breakers are each composed of two physical units CB31, CB32 and CB41, CB42, respectively.

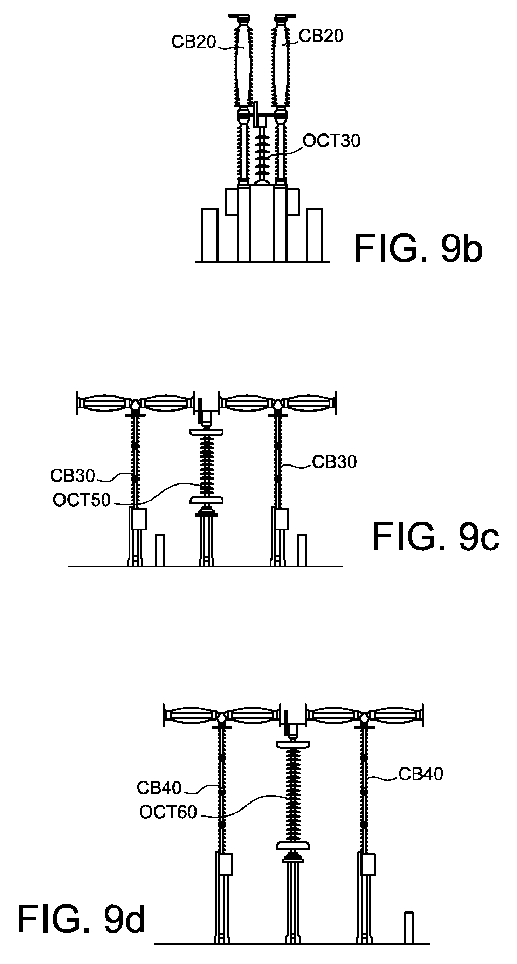

In the variant of the second embodiment, for substations with voltage level ranging from 100 kV - 550 kV where a circuit breaker is basically a single physical unit, as shown on figures 9a-9c, an additional circuit breaker is connected in back to back fashion with the existing circuit breaker, with an optical current transformer OCT10, OCT30, OCT50 located in between the circuit breakers CB10, CB20, CB30, for a voltage level of 100-145 kV, 245-300 kV and 550 kV respectively.

For substations with voltage level ranging from 700 kV - 1200 kV where a circuit breaker is a series of two single physical units, the additional circuit breaker required for achieving the variant of the second embodiment is already available. The current transformer can be easily located in between the two circuit breakers, therefore meeting the desired objectives with the existing resources. Figure 9d illustrates such an arrangement with an optical current transformer OCT60 arranged in between two 400 kV circuit breakers CB40 connected in series with each other for 800 kV voltage level.

The circuit breakers discussed so far are all live tank circuit breakers. When it comes to UHV (Ultra High Voltage) level applications where voltages can be of the order of 1000 kV - 1200 kV, it is quite often preferable to opt for equivalent dead tank circuit breakers, primarily because of space requirements and clearance issues. Another important aspect is that with the live tank designs the circuit breaker is effectively a series of two breakers each rated equal to half the system voltage, while with the equivalent dead tank designs, it is a single unit rated equal to the full system voltage.

It shall be appreciated that with 1200 kV voltage level application, the above considerations for 700 kV - 1200 kV voltage level holds true for live tank circuit breakers.

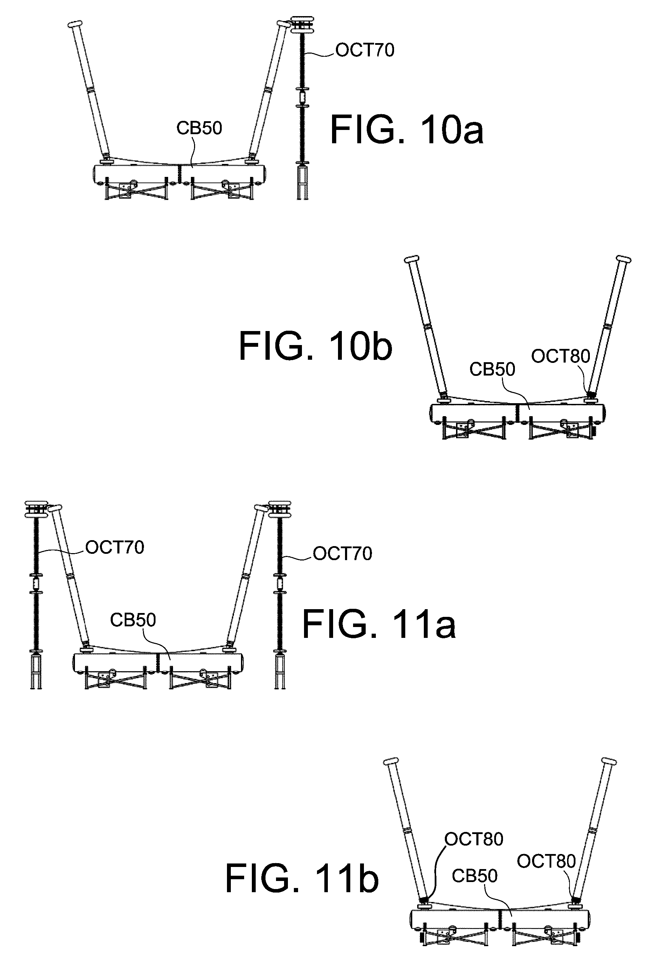

For dead tank circuit breakers substations at a voltage level of 1000-1200 kV, and as shown on figure 10a and figure 11a, an optical current transformer OCT70 can be placed in close proximity to the dead tank circuit breaker CB50. Figure 10a illustrates a feeder circuit breaker with an optical current transformer placed in close proximity, while figure 11a illustrates the circuit breaker of a bus coupling section with optical current transformers placed in close proximity on each of its sides.

Within the COSI range of optical current transformers is a portable, very flexible and easy to install optical current transformer, the COSI-CT type F3 module. The COSI-CT F3 basically consists of a wrap around flexible fibre optic sensor head which can be wound around high voltage bushings, enclosed buses, GIS (Gas insulated substation) enclosures and such other similar installations, wherein it could be difficult for a conventional current transformer to have a contact with the primary conductor because of space or limitation to access.

The maximum distance between the fibre optic sensor and the electronics module can be as high as 10 km. This enables the electronics module to be located either in the switchyard with proximity to the primary equipment or alternatively to be mounted on the protection panel inside the control room.

As shown on figure 10b and figure 11b, such a COSI - CT F3 current transformer OCT80 can be wound on the bottom part of the UHV bushing of a 1200 kV dead tank circuit breaker CB50(the same principle apply for other dead tank circuit breakers catering to different voltage level, such as Extra High Voltage level).

Figure 10b illustrates a feeder circuit breaker with an optical current transformer OCT80 mounted on a bushing, while figure 11b illustrates the circuit breaker of a bus coupling section with optical current transformers OCT80 mounted on a bushing on each of its sides.

Interestingly, the point where a COSI - CT F3 current transformer OCT80 is wound on the bushing is at earth potential. Therefore possibility of faults occurring between the circuit breaker and the associated current transformer is totally eliminated.

The electronics module can be placed anywhere on the support frame of the circuit breaker or alternatively can be mounted on the panel inside the control room.

It will be appreciated that figures 6a-6b, 7a-7b, 8a-8b, 9a-9d, 10a-10b and 11a-11b are elevation drawings showing the physical location or mounting of an optical current transformer with respect to the circuit breaker(s). These drawings are not drawn to scale, the objective of providing this information is to help the reader in understanding the practicality of the proposed solution. In particular, optical current transformers are much more compact in real life than they visually appear on these figures.

As mentioned earlier, the discussed application of the flexible COSI CT F3 current transformer is suitable for all voltage levels wherever the dead tank designs of circuit breakers are implemented. With this implementation, faults occurring between a feeder circuit breaker and the current transformer are totally eliminated and the offered bus bar protection is truly operational for faults occurring only in the bus bar or towards the bus bar. The probability or the possibility of faults occurring between the breaker and the current transformer is equal to zero or can be said to be completely eliminated. Moreover same principle can be used to eliminate the possibility of faults within a bus coupling section between the current transformer and the circuit breaker(s).

It derives from the above description that the invention leads to:
- continuity of supply to the customers being ensured;
- loss in revenue due to the outage of the healthy feeders (upon fault between feeder circuit breaker and current transformer) or the outage of the healthy busbar zone (upon fault in the bus coupling section between central current transformer and one of the circuit breakers)being prevented;
- threat to system stability being prevented, which otherwise could have been resulted on account of tripping of multiple feeders associated with the specific busbar zone (upon feeder fault), or on delayed tripping the faulty busbar zone (upon bus coupling fault).

## Claims

1. Electrical bus system comprising a first busbar zone (Z1 Z3), at least one first feeder bay (F11-F14, F3) to which is associated a first current transformer (OCT11-OCT14, OCT3) and which is connected to the first busbar zone (Z1, Z3) by means of a first feeder circuit breaker (CB11-CB14, CB31-CB32), the at least one first feeder bay being coupled to at least one second feeder bay (F21-F24, F4) by a bus coupling section (BCS3, BSC4, BCS5) wherein at least one circuit breaker (CB6-CB7, CB8, CB9-CB10) is arranged, **characterized in that** at least one current transformer (OCT1-2, OCT7-OCT8, OCT9) is arranged in the bus coupling section and the first current transformer (OCT11-OCT14, OCT3) and/or, respectively, the at least one current transformer (OCT1-2, OCT7-OCT8, OCT9) of the bus coupling section is an optical current transformer mounted on or installed in close proximity to the first feeder circuit breaker, respectively to the at least one circuit breaker of the bus coupling section, at a distance lower than 1 meter.

2. Electrical bus system according to claim 1, wherein the first current transformer and/or, respectively, the at least one current transformer of the bus coupling section, is an optical current transformer mounted on or installed in close proximity to the first feeder circuit breaker, respectively to the at least one circuit breaker of the bus coupling section, at a distance lower than 50 cm, still more preferably at a distance lower than 30 cm, still more preferably at a distance lower than 10 cm, still more preferably at a distance lower than 5 cm.

3. Electrical bus system according to any one of claims 1-2, wherein the first feeder circuit breaker, and/or the at least one circuit breaker of the bus coupling section respectively, comprises two circuit breakers (CB31, CB32) arranged in series and each rated equal to half the system voltage, and wherein the first current transformer (OCT60), respectively the at least one current transformer of the bus coupling section, is arranged at one input of the series arrangement of the two circuit breakers.

4. Electrical bus system according to any one of claims 1-3, wherein the at least one second feeder bay (F21-F24, F4) is connected to a second busbar zone (Z2, Z4) by means of a second feeder circuit breaker (CB21-CB24, CB41-C42) and is associated to a second current transformer (OCT21-OCT24, OCT4) which is an optical current transformer.

5. Electrical bus system according to claim 4, wherein the bus coupling section (BCS3) comprises an overlapping region (OR1-2) of the two busbar zones (Z1, Z2) where at least one current transformer (OCT1-2) is arranged.

6. Electrical bus system according to claim 4, wherein the two busbar zones (Z3, Z4) are arranged according to a 1.5 breaker bus configuration, wherein the bus coupling section (BCS4, BCS5) is a tie coupling section to which each busbar zone (Z3, Z4) is connected by means of at least one feeder circuit breaker (CB31-CB32, CB41-CB42), at least one current transformer (OCT7-OCT8, OCT9) being arranged in the bus coupling section.

7. Electrical bus system according to any one of claims 5-6, wherein two optical current transformers (OCT7, OCT8) and one circuit breaker (CB8) are arranged in the bus coupling section (BCS4), said circuit breaker in the coupling section having one of said optical current transformers on each of its sides.

8. Electrical bus system according to any one of claims 5-6, wherein one optical current transformer (OCT1-2, OCT9) and two circuit breakers (CB6-CB7, CB9-CB10) are arranged in the bus coupling section (BCS3, BCS5), said optical current transformer in the coupling section having one of said circuit breakers on each of its sides.

9. Electrical bus system according to any one of claims 1-8, wherein the first feeder circuit breaker and/or the at least one circuit breaker of the bus coupling section is a dead tank circuit breaker comprising a bushing having an earth potential part, and wherein the first current transformer and/or the at least one current transformer of the bus coupling section is an optical current transformer having a sensor head which is wound around said earth potential part of the bushing of the dead tank circuit breaker.

## Patentansprüche

1. Elektrisches Sammelschienensystem, umfassend eine erste Sammelschienenzone (Z1, Z3), wenigstens eine erste Speiseebene (F11 - F14, F3), der ein erster Stromtransformator (OCT11 - OCT 14, OCT 3) zugeordnet ist und die mit der ersten Sammelschienenzone (Z1, Z3) durch einen ersten Speiseschutzschalter (CB11 - CB14, CB31 - CB32) verbunden ist, wobei die wenigstens eine erste Speiseebene mit wenigstens einer zweiten Speiseebene (F21 - F24, F4) durch einen Sammelschienen-Kupplungsabschnitt (BCS3, BSC4, BCS5) gekoppelt ist, in dem wenigstens ein Schutzschalter (CB6 - CB7, CB8, CB9 - CB10) angeordnet ist, **dadurch gekennzeichnet, daß** wenigstens ein Stromtransformator (OCT1 - 2, OCT7 - OCT8, OCT 9) in dem Sammelschienen-Kupplungsteil angeordnet ist, und der erste Stromtransformator (OCT11 - OCT14, OCT3) und / oder entsprechend der wenigstens eine Stromtransformator (OCT1 - 2, OCT7 - OCT8, OCT 9) des Sammelschienen-Kupplungsabschnitts ein optischer Stromtransformator ist, der auf dem ersten Speiseschutzschalter oder in enger Nachbarschaft des ersten Speiseschutzschalters installiert ist bzw. bei dem wenigstens einen Schutzschalter des Sammelschienen-Kupplungsabschnitts, und zwar in einem Abstand von weniger als 1 Meter.

2. Elektrisches Sammelschienensystem nach Anspruch 1, **dadurch gekennzeichnet, daß** der erste Stromtransformator und / oder entsprechend der wenigstens eine Stromtransformator des Sammelschienen-Kupplungsabschnitts ein optischer Stromtransformator ist, der auf dem oder in enger Nachbarschaft zu dem ersten Speiseschutzschalter installiert ist bzw. bei dem wenigstens einen Schutzschalter des Sammelschienen-Kupplungsabschnitts, und zwar in einem Abstand von weniger als 50 cm und vorzugsweise in einem Abstand von weniger als 30 cm, noch mehr bevorzugt weniger als 10 cm und noch mehr bevorzugt in einem Abstand von weniger als 5 cm.

3. Elektrisches Sammelschienensystem nach einem der Ansprüche 1 bis 2, **dadurch gekennzeichnet, daß** der erste Speiseschutzschalter und / oder der wenigstens eine Schutzschalter des Sammelschienen-Kupplungsabschnittes zwei Schutzschalter (CB31, CB32) aufweist, die in Reihe geschaltet sind und von denen jeder für die halbe Systemspannung bemessen ist, und wobei der erste Stromtransformator (OCT60) bzw. der wenigstens eine Stromtransformator des Sammelschienen-Kupplungsabschnitts an dem einen Eingang der Reihen-Anordnung der beiden Schutzschalter liegt.

4. Elektrisches Sammelschienensystem nach einem der Ansprüche 1 bis 3, **dadurch gekennzeichnet, daß** wenigstens eine zweite Speiseebene (F21 - F24, F4) mit einer zweiten Sammelschienenzone (Z2, Z4) durch einen zweiten Speiseschutzschalter (CB21 - CB24, CB41 - CB42) verbunden und einem zweiten Stromtransformator (OCT21 - OCT24, OCT4) zugeordnet ist, der ein optischer Stromtransformator ist.

5. Elektrisches Sammelschienensystem nach Anspruch 4, **dadurch gekennzeichnet, daß** der Sammelschienen-Kupplungsabschnitt (BCS3) einen überlappenden Bereich (OR1 - 2) der beiden Sammelschienenzonen (Z1, Z2) aufweist, wo wenigstens ein Stromtransformator (OCT1 - 2) angeordnet ist.

6. Elektrisches Sammelschienensystem nach Anspruch 4, **dadurch gekennzeichnet, daß** die beiden Sammelschienenzonen (Z3, Z4) gemäß einer 1,5 Schalter- Sammelschienenkonfiguration angeordnet sind, wobei der Sammelschienen-Kupplungsabschnitt (BCS4, BCS5) ein Verbindungkupplungsabschnitt ist, der mit jeder Sammelschienenzone (Z3, Z4) verbunden ist, und zwar mit Hilfe wenigstens eines Speiseschutzschalters (CB31 - CB32, CB41 - CB42), wobei ferner wenigstens ein Stromtransformator (OCT7 - OCT8, OCT9) in dem Sammelschienen-Kupplungsabschnitt angeordnet ist.

7. Elektrisches Sammelschienensystem nach einem der Ansprüche 5 bis 6, **dadurch gekennzeichnet, daß** zwei optische Stromtransformatoren (OCT7, OCT8) und ein Schutzschalter (CB8) in dem Sammelschienen-Kupplungsabschnitt (BCS4) angeordnet sind, wobei der Schutzschalter in dem Kupplungsabschnitt auf jeder seiner Seiten einen der genannten optischen Stromtransformatoren aufweist.

8. Elektrisches Sammelschienensystem nach einem der Ansprüche 5 bis 6, **dadurch gekennzeichnet, daß** in dem Sammelschienen-Kupplungsabschnitt (BCS3, BCS5) ein optischer Stromtransformator (OCT1 - 2, OCT9) und zwei Schutzschalter (CB6 - CB7, CB9 -CB10) angeordnet sind, wobei der optische Stromtransformator in dem Kupplungsabschnitt auf jeder seiner Seiten einen der Schutzschalter aufweist.

9. Elektrisches Sammelschienensystem nach einem der Ansprüche 1 bis 8, **dadurch gekennzeichnet, daß** der erste Speiseschutzschalter und / oder der wenigstens eine Schutzschalter des Sammelschienen-Kupplungsabschnittes ein Kesselschutzschalter ist, der eine Durchführung aufweist, welche ein Erdungspotentialteil besitzt, und daß der erste Stromtransformator und / oder der wenigstens eine Stromtransformator des Sammelschienen-Kupplungsabschnittes ein optischer Stromtransformator mit einem Sensorkopf ist, der rund um den Erdungspotentialteil der Durchführung des Kesselschutzschalters gewickelt ist.

## Revendications

1. Système de bus électrique comprenant une première zone de barre omnibus (Z1, Z3), au moins un premier départ de ligne (F11-F14, F3) auquel est associé un premier transformateur de courant (OCT11-OCT14, OCT3) et qui est connecté à la première zone de barre omnibus (Z1, Z3) au moyen d'un premier disjoncteur de ligne (CB11-CB14, CB31-CB32), ledit au moins un premier départ de ligne étant couplé à au moins un deuxième départ de ligne (F21-F24, F4) par une section de couplage de bus (BCS3, BSC4, BCS5) dans laquelle au moins un disjoncteur (CB6-CB7, CB8, CB9-CB10) est agencé,
**caractérisé en ce qu'**au moins un transformateur de courant (OCT1-2, OCT7-OCT8, OCT9) est agencé dans la section de couplage de bus et le premier transformateur de courant (OCT11-OCT14, OCT3) et/ou, respectivement, ledit au moins un transformateur de courant (OCT1-2, OCT7-OCT8, OCT9) de la section de couplage de bus est un transformateur de courant optique monté sur ou installé à proximité étroite du premier disjoncteur de ligne, respectivement dudit au moins un disjoncteur de la section de couplage de bus, à une distance inférieure à 1 mètre.

2. Système de bus électrique selon la revendication 1, dans lequel le premier transformateur de courant et/ou, respectivement, ledit au moins un transformateur de courant de la section de couplage de bus, est un transformateur de courant optique monté sur ou installé à proximité étroite du premier disjoncteur de ligne, respectivement, dudit au moins un disjoncteur de la section de couplage de bus, à une distance inférieure à 50 cm, encore plus préférablement à une distance inférieure à 30 cm, encore plus préférablement à une distance inférieure à 10 cm, encore plus préférablement à une distance inférieure à 5 cm.

3. Système de bus électrique selon l'une quelconque des revendications 1 et 2, dans lequel le premier disjoncteur de ligne, et/ou ledit au moins un disjoncteur de la section de couplage de bus respectivement, comprend deux disjoncteurs (CB31, CB32) agencés en série et chacun d'une tension assignée égale à la moitié de la tension de système, et dans lequel le premier transformateur de courant (OCT60), respectivement ledit au moins un transformateur de courant de la section de couplage de bus, est agencé au niveau d'une entrée de l'agencement en série des deux disjoncteurs.

4. Système de bus électrique selon l'une quelconque des revendications 1 à 3, dans lequel ledit au moins un deuxième départ de ligne (F21-F24, F4) est connecté à une deuxième zone de barre omnibus (Z2, Z4) au moyen d'un deuxième disjoncteur de ligne (CB21-CB24, CB41-C42) et est associé à un deuxième transformateur de courant (OCT21-OCT24, OCT4) qui est un transformateur de courant optique.

5. Système de bus électrique selon la revendication 4, dans lequel la section de couplage de bus (BCS3) comprend une région de superposition (OR1-2) des deux zones de barre omnibus (Z1, Z2) dans laquelle au moins un transformateur de courant (OCT1-2) est agencé.

6. Système de bus électrique selon la revendication 4, dans lequel les deux zones de barre omnibus (Z3, Z4) sont agencées selon une configuration de bus de disjoncteurs 1.5, dans lequel la section de couplage de bus (BCS4, BCS5) est une section de couplage de jonction à laquelle chaque zone de barre omnibus (Z3, Z4) est connectée au moyen d'au moins un disjoncteur de ligne (CB31-CB32, CB41-CB42), au moins un transformateur de courant (OCT7-OCT8, OCT9) étant agencé dans la section de couplage de bus.

7. Système de bus électrique selon l'une quelconque des revendications 5 et 6, dans lequel deux transformateurs de courant optiques (OCT7, OCT8) et un disjoncteur (CB8) sont agencés dans la section de couplage de bus (BCS4), ledit disjoncteur dans la section de couplage ayant un desdits transformateurs de courant optiques sur chacun de ses côtés.

8. Système de bus électrique selon l'une quelconque des revendications 5 et 6, dans lequel un transformateur de courant optique (OCT1-2, OCT9) et deux disjoncteurs (CB6-CB7, CB9-CB10) sont agencés dans la section de couplage de bus (BCS3, BCS5), ledit transformateur de courant optique dans la section de couplage ayant un desdits disjoncteurs sur chacun de ses côtés.

9. Système de bus électrique selon l'une quelconque des revendications 1 à 8, dans lequel le premier disjoncteur de ligne et/ou ledit au moins un disjoncteur de la section de couplage de bus sont un disjoncteur à cuve métallique au potentiel de terre comprenant une traversée ayant une partie au potentiel de terre, et dans lequel le premier transformateur de courant et/ou ledit au moins un transformateur de courant de la section de couplage de bus sont un transformateur de courant optique comportant une tête de capteur qui est enroulée autour de ladite partie au potentiel de terre de la traversée du disjoncteur à cuve métallique au potentiel de terre.
